# EUROPEAN PATENT SPECIFICATION

(11) **EP 2 180 632 B1**
(45) Date of publication and mention of the grant of the patent: **03.09.2014**
(21) Application number: 08773227.7
(22) Date of filing: 21.07.2008
(51) Int. Cl.: H04L 9/32, H04L 12/24, H04L 29/06

(54) **A METHOD FOR TRUSTED NETWORK CONNECT BASED ON TRI-ELEMENT PEER AUTHENTICATION**
VERFAHREN FÜR TRUSTED NETWORK CONNECT AUF BASIS EINER DREIELEMENTIGEN PEER-AUTHENTIFIZIERUNG
PROCÉDÉ POUR TRUSTED NETWORK CONNECT REPOSANT SUR UNE AUTHENTIFICATION EN TROIS ÉLÉMENTS

(30) Priority: 01.08.2007 CN 200710018395
(43) Date of publication of application: 28.04.2010
(73) Proprietor: China Iwncomm Co., Ltd., Xi'an, Shaanxi 710075 (CN)
(72) Inventor: XIAO, Yuelei, Shaanxi 710075 (CN); CAO, Jun, Shaanxi 710075 (CN); LAI, Xiaolong, Shaanxi 710075 (CN); HUANG, Zhenhai, Shaanxi 710075 (CN)
(74) Representative: Pulieri, Gianluca Antonio
(86) International application number: PCT/CN2008/071702
(87) International publication number: WO 2009/015581

(56) References cited:
- EP-A2- 1 182 557
- CN-A- 1 976 337
- CN-A- 101 136 928
- CN-A- 101 159 640
- CN-A- 101 159 660
- US-B1- 6 199 113
- "TCG Trusted Network Connect TNC Architecture for Interoperabilty, Specification Version 1.1, Revision 2", INTERNET CITATION, 1 May 2006 (2006-05-01), XP002433849, Retrieved from the Internet: URL:https://www.trustedcomputinggroup.org/ specs/TNC [retrieved on 2007-05-15]
- HE X.: 'New Generation Network Security Access Technologies TNC' NETINFO SECURITY 31 March 2007, pages 71 - 73, XP008138414

## Description

### Field of the Invention

The present invention relates to the field of network security and in particular to a Trusted Network Connect method based on Tri-element Peer Authentication.

### Background of the Invention

Malicious software such as viruses, worms has become a big problem as informationization develops. There have been more than thirty-five thousand of malicious software, and more than forty million computers are infected each year. To protect computers from such attacks, secure transmission and checking of data while they are inputted have to be addressed, and protection has to be performed from the origins, i.e., endpoints connected to the network. However, traditional security technologies fail to protect against numerous malicious attacks.

The Trusted Computing Group (TCG) defined a trusted computing based network connection specification, Trusted Network Connect (TNC), briefly referred to TCG-TNC, which includes an open architecture for endpoint integrity and a set of standards guaranteeing secure interoperations. This set of standards can protect a network when the user needs, and the user may decide to what extent the network is protected. Basically, the TCG-TNC intends to establish connections starting with endpoint integrity. First, a set of policies for the operation status of an inner system of the trusted network has to be created. Only endpoints complying with the policy set for the network can access the network, and the network isolates and locates devices that do not comply with the policies. Rootkit attacks can also be blocked due to the use of Trusted Platform Module (TPM). A rootkit is an attack script, a modified system program, or a set of attack scripts and tools that is used to illegally obtain a top control privilege of a target system.

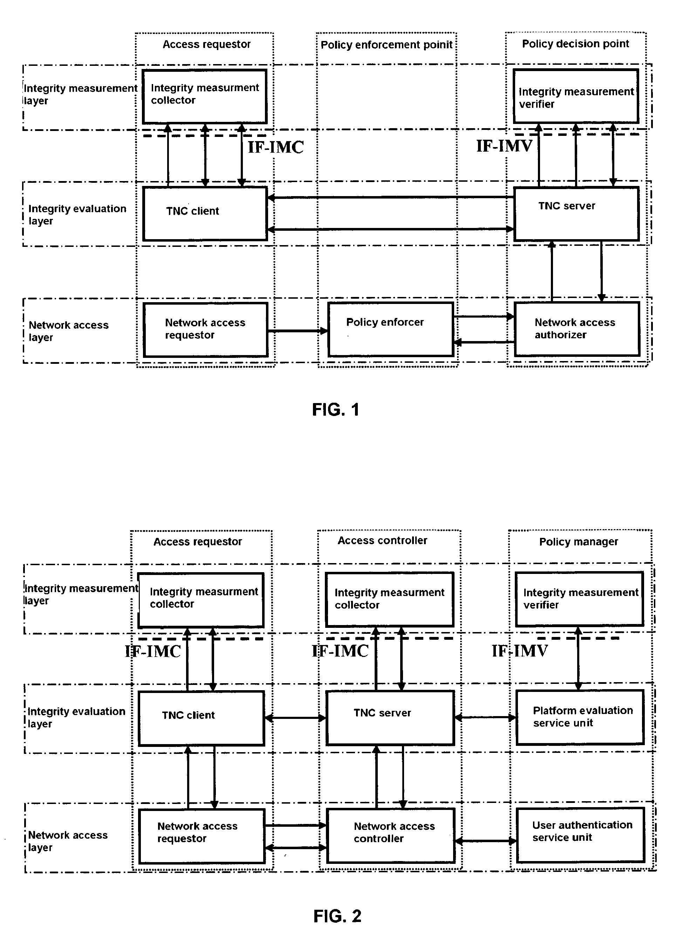

In the TCG-TNC architecture, a complete information transmission of a trusted network connection is illustrated in Fig.1. Prior to the establishment of the network connection, the TNC client prepares required platform integrity information, and sends it to the Integrity Measurement Collector, IMC. In an endpoint with a TPM, this also means that the platform information required for a network policy is hashed and stored into Platform Configuration Registers (PCRs). The TNC server pre-sets a platform integrity verification requirement and sends it to the Integrity measurement verifier, IMV. The process is detailed as follows:
(1) A network access requestor initiates an access request to a policy enforcer.
(2) The policy enforcer sends access request description to a network access authorizer.
(3) Upon reception of the access request description from the network access requestor, the network access authorizer performs a user authentication protocol with the network access requestor. Upon successful user authentication, the network access authorizer sends the access request and user authentication success information to the TNC server.
(4) Upon reception of the access request and the user authentication success information sent by the network access authorizer, the TNC server performs bidirectional platform credential authentication with the TNC client, e.g., to verify an Attestation Identity Key (AIK) of the platform.
(5) Upon successful platform credential authentication, the TNC client notifies the IMC that a new network connection is started up and an integrity handshake protocol is to be performed. The IMC returns the required platform integrity information via an integrity measurement collector interface, IF-IMC. The TMC server sends the platform integrity information to the IMV via an integrity measurement verifier interface, IF-IMV.
(6) The TNC client and the TNC server perform one or more data changes during the performance of the integrity handshake protocol until the TNC server is satisfied.
(7) Upon finishing the performance of the integrity handshake protocol on the TNC client, the TNC server sends a recommendation to the network access authorizer to request for the access to be permitted. If there are other security considerations, the policy decision point may not allow the access of the access requestor.
(8) The network access authorizer sends an access decision to the policy enforcer, and the policy enforcer finally enforces the access decision to control the access of the access requestor.

Currently, no developed products with the TCG-TNC architecture have been put into the market. Some important aspects of the TCG-TNC architecture are still in a phase of research, and standardization and primarily have the following drawbacks:
1. Poor extendibility. A secure channel is predefined between the policy enforcement point and the policy decision point, and the policy decision point possibly manages a large number of policy enforcement points, consequently, the policy enforcement point has to configure a large number of secure channels, which results in complicated management and poor extendibility.
2. Complicated key agreement process. In order to protect data in the network access layer, a secure channel has to be established between the access requestor and the policy decision point, that is, session key agreement has to be performed between the access requestor and the policy decision point. However, data protection is also required between the access requestor and the policy enforcement point, therefore session key agreement has to be performed again between the access requestor and the policy enforcement point, which complicates the key agreement process.
3. Low security level. The primary key resulting from the agreement between the access requestor and the policy decision point is sent from the policy decision point to the policy enforcement point. As the key is transmitted over the network, new security attack points may be introduced, and lowers the security level. Moreover, the two times of session key agreement use the same primary key, which may also reduce the security level of the entire TNC architecture.
4. The access requestor may not be able to verify validity of the AIK certificate of the policy decision point. During the platform credential authentication, the access requestor and the policy decision point use an AIK private key and a certificate for the bidirectional platform credential authentication, and both have to verify validity of the AIK certificate. If the policy decision point is a network service provider for the access requestor, then the access requestor can not access the network before a trusted network connection is established, that is, validity of the AIK certificate of the policy decision point can not be verified, which lowers the security level.
5. The platform integrity evaluation is not parallel. In the TCG-TNC architecture, the policy decision point performs platform integrity evaluation on the access requestor, but the access requestor does not perform platform integrity evaluation on the policy decision point. If the platform of the policy decision point is not trusted, it is insecure for the access requestor to connect with a non-trusted device. However, parallel trust is required in Ad Hoc networks. "TCG Trusted Network Connect TNC Architecture for Interoperability, Specification Version 1.1, Revision 2" discloses basic message flows across interfaces in the TNC-Architecture. EP1182557A2 discloses a method of performing a service for a requestor on a computing platform in which the requestor provides a specification of the service to the computing platform and the specification of the service establishes specified levels of trust for at least some of the processes in the service.

### Summary of the Invention

The invention provides a TNC method based on Tri-element Peer Authentication, which may solve the technical problems in the prior art of poor extendibility, complicated key agreement process, low security, possible disability of the access requestor to verify validity of the AIK certificate, and non-parallel platform integrity evaluation.

The technical solution of the invention is described as follows:

A Trusted Network Connect method based on Tri-element Peer Authentication includes:
(1.) initialization step:
   (1.1) pre-preparing, by a TNC client of an access requestor and a TNC server of an access controller, platform integrity information, and sending the platform integrity information to respective Integrity Measurement Collectors, IMCs, in an integrity measurement layer;
   (1.2) pre-setting, by the TNC client and the TNC server, an integrity verification requirement including a list of Platform Configuration Registers, PCRs, for which the access requestor and the access controller request each other for verification; and
   (1.3) hashing, by trusted Platform Modules, TPMs, of the access requestor and the access controller, information required for a network policy, and storing in the PCRs;
(2.) user authentication step:
   (2.1) initiating, by a network access requestor, an access request to a network access controller;
   (2.2) initiating, by the network access controller, upon reception of the access request, a bidirectional user authentication process, and starting a Tri-element Peer Authentication protocol between the network access requestor, the network access controller and a user authentication service unit in a network access layer, so as to perform bidirectional user authentication and key agreement of the access requestor and the access controller; and
   (2.3) sending, by the network access requestor and the network access controller, upon successful bidirectional user authentication, user authentication success information to the TNC client and the TNC server respectively, and controlling points of the network access requestor and the network access controller according to a user authentication result;
(3.) integrity evaluation step:
   using, by the TNC client, the TNC server and a platform evaluation service unit in an integrity evaluation layer, a Tri-element Peer Authentication method to perform platform integrity evaluation of the access requestor and the access controller when the TNC server of the access controller receives the user authentication success information sent by the network access controller; and
(4.) access control step:
   gathering, by the TNC server and the TNC client, results of the platform integrity evaluation of the access controller and the access requestor respectively, and sending recommendations to the network access requestor and the network access controller respectively, and controlling, by the network access requestor and the network access controller, the ports according to respectively received recommendations, so as to perform mutual access control of the access requestor and the access controller.

Preferably, the platform integrity evaluation may be performed as follows:
performing platform credential authentication: verifying, by a policy manager, validity of Attestation Identity Key, AIK, certificates of the access requestor and the access controller; and
performing platform integrity verification: verifying, by the policy manager, platform integrity of the access requestor and the access controller.

Preferably, the step of the TNC client, the TNC server and the platform evaluation service unit in the integrity evaluation layer using the Tri-element Peer Authentication method to perform platform integrity evaluation of the access requestor and the access controller includes:
(3.1) sending, by the TNC server of the access controller, to the access requestor a random number N_{S} generated by a TPM of the access controller, the AIK certificate Cert_{AC-AIK} of the access controller, and the list of PCRs PCRsList_{AR} for which the access controller requests from the access requestor, upon receiving the user authentication success information sent by the network access controller or being confirmed the user authentication is successful;
(3.2) extracting, by the access requestor, upon reception of the information sent in step (3.1) by the access controller, corresponding PCR values from the TPM according to the list of PCRs requested by the access controller; then, signing the corresponding PCR values extracted from the TPM and the random number N_{S} generated by the TPM of the access controller with an AIK private key in the TPM; and sending, by the access requestor, to the access controller, the random number N_{S} generated by the TPM of the access controller, a random number N_{AR} generated by a TPM of the access requestor, the AIK certificate Cert_{AR-AIK} of the access requestor, the list of PCRs PCRsList_{AC} for which the access requestor requests from the access controller, PCR values PCRs_{AR} for which the access controller requests, a measurement log Log_{AR} corresponding to the PCR values for which the access controller requests, and the signature generated by the access requestor signing the corresponding PCR values extracted from the TPM and the random number N_{S} generated by the TPM of the access controller with the AIK private key in the TPM;
(3.3) verifying, by the TPM, upon the access controller receiving the information sent in step (3.2) by the access requestor, consistency of the random number N_{S} generated by the TPM of the access controller, and verifying validity of an AIK signature of the access requestor by using a public key in the AIK certificate of the access requestor; extracting corresponding PCR values from the TPM according to the list of PCRs for which the access requestor requests; signing, by the access controller, the corresponding PCR values extracted from the TPM and the random number N_{AR} generated by the TPM of the access requestor with an AIK private key in the TPM,; and sending, by the access controller, to a policy manager, the random number N_{S} generated by the TPM of the access controller, the random number N_{AR} generated by the TPM of the access requestor, the AIK certificate Cert_{AR-AIK} of the access requestor, the PCR values PCRs_{AR} for which the access controller requests, the measurement log Log_{AR} corresponding to the PCR values for which the access controller requests, the signature generated by the access requestor signing the corresponding PCR values extracted from the TPM and the random number N_{S} generated by the TPM of the access controller with the AIK private key in the TPM, a random number N_{AC} generated for a user of the access controller, the AIK certificate Cert_{AC-AIK} of the access controller, PCR values PCRs_{AC} for which the access requestor requests, a measurement log Log_{AC} corresponding to the PCR values for which the access requestor requests, and the signature generated by the access controller signing the corresponding PCR values extracted from the TPM and the random number N_{AR} generated by the TPM of the access requestor with the AIK private key in the TPM;
(3.4) verifying, by the policy manager, upon reception of the information sent in step (3.3) by the access controller, validity of the AIK signatures and AIK certificates of the access requestor and the access controller by using public keys corresponding to the respective AIK certificates of the access requestor and the access controller; recalculating, corresponding PCR values according to the measurement logs of the corresponding PCR values extracted from the respective TPMs of the access requestor and the access controller and standard integrity measurement values of respective platform components in a database, and comparing with the corresponding PCR values in the information sent in step (3.3) by the access controller; generating, a result of AIK certificate authentication and platform integrity verification of the access requestor and the access controller, Result_{AIK-PCRs}, and signing the generated result of AIK certificate authentication and platform integrity verification with a private key corresponding to an identify certificate of the policy manager [Result_{AIK-PCRs}]_{Sig}; and sending, to the access controller, the result of AIK certificate authentication and platform integrity verification of the access requestor and the access controller Result_{AIK-PCRs}, and the signature [Result_{AIK-PCRs}]_{Sig} signed by the policy manager of the result of AIK certificate authentication and platform integrity verification of the access requestor and the access controller;
(3.5) verifying, by the access controller, upon reception of the information sent in step (3.4) by the policy manager, whether a random number N_{AC} generated for the user of the access controller is consistent with the random number N_{AC} sent in the information in step (3.4) by the policy manager and generated for the user of the access controller, and verifying validity of a user signature of the policy manager; verifying, by the TPM, consistency of the random number N_{S} generated by the TPM of the access controller; and verifying consistency of the AIK certificate Cert_{AR-AIK} of the access requestor and the PCR values PCRs_{AR} for which the access controller requests; verifying the result of AIK certificate verification of the access requestor Re_{AR-AIK} and the result of platform integrity verification of the access requestor Re_{AR} ,and generating a result of platform integrity evaluation of the access requestor; and sending, by the access controller, to the access requestor, the information sent in step (3.4) and the signature generated by the access controller signing the corresponding PCR values extracted from the TPM and the random number N_{AR} generated by the TPM of the access requestor with the AIK private key in the TPM; and
(3.6) verifying, by the access requestor, upon reception of the information sent in step (3.5) by the access controller, validity of the AIK signature of the access controller and the user signature of the policy manager; verifying, the TPM, consistency of the random number N_{AR} generated by the TPM of the access requestor; verifying consistency of the AIK certificate of the access controller and the PCR values for which the access requestor requests; and verifying the result of AIK certificate verification of the access controller Re_{AC-AIK} and the result of platform integrity verification of the access controller Re_{AC}, and generating a result of platform integrity evaluation of the access requestor.

Preferably, the result of AIK certificate authentication and platform integrity verification of the access requestor and the access controller generated in step (3.4) Result_{AIK-PCRs}, includes: the random number N_{AC} generated for the user of the access controller, the random number N_{S} generated by the TPM of the access controller, the AIK certificate Cert_{AR-AIK} of the access requestor, the PCR values PCRs_{AR} for which the access controller requests, the result of platform integrity verification of the access requestor Re_{AR}, the random number N_{AR} generated by the TPM of the access requestor, the AIK certificate Cert_{AC-AIK} of the access controller, the list of PCRs, the PCR values PCRs_{AC} for which the access requestor requests, the result of platform integrity verification of the access controller Re_{AC}, the result of AIK certificate verification of the access requestor Re_{AR-AIK}, and the result of AIK certificate verification of the access controller Re_{AC-AIK}.

Preferably, the recommendations sent in step (4.) by the TNC server and the TNC client to the network access requestor and the network access controller may include access permission information, access prohibition information or isolation and repair information.

Preferably in the process of generating the result of platform integrity evaluation of the access requestor in step (3.5), the access controller may repeat step (3.1) - step (3.6) in order to exchange and verify integrity information again with the access requestor.

Preferably in the process of generating the result of platform integrity evaluation of the access requestor in step (3.6), the access requestor may repeat step (3.2) to step (3.6) to exchange and verify integrity information again with the access controller

As can be seen from the foregoing technical solution, key agreement is performed between the access requestor and the access controller, and security protection is performed directly for the data in the platform integrity evaluation process and service data following the trusted network connection, no additional session key agreements are required. Therefore, key agreement process can be simplified and security of the trusted network connection can be improved. The primary key generated for authentication does not have to be sent over the network, which ensures security of the key.

Moreover, the invention uses the Tri-element Peer Authentication method, i.e., third party based bidirectional authentication method, in the integrity evaluation layer for centralized authentication and verification of AIK certificates and platform integrity of the access requestor and the access controller, thereby enhancing security of the platform integrity evaluation process and simplify key management and integrity verification mechanism of the Trusted Network Connect architecture.

Furthermore, the invention uses the Tri-element Peer Authentication method not only for bidirectional user authentication in the network access layer but also for bidirectional platform integrity evaluation at the integrity evaluation layer, which improves security of the entire Trusted Network Connect architecture.

In practice, the policy manager may have to manage a large number of access controllers. The invention can eliminate the demand for strong security association between the access controller and the policy manager, thereby improving extendibility of Trusted Network Connect.

### Brief Description of the Drawings

Fig.1 is a schematic diagram of a complete information transmission for a trusted network connection in an existing TCG-TNC architecture;
Fig.2 is a schematic diagram of a complete information transmission for a trusted network connection in a TNC architecture according to the invention; and
Fig.3 is a schematic diagram of a platform integrity evaluation process in the TNC architecture according to the invention.

### Reference numerals are described below:

N_{S}: a random number generated by a TPM of an access controller; Cert_{AC-AIK}: an AIK certificate of the access controller; PCRsList_{AR}: a list of PCRs for which an access controller requests from the access requestor; N_{AR}: a random number generated by a TPM of the access requestor; Cert_{AR-AIK}: an AIK certificate of the access requestor; PCRs_{ListAC}: a list of PCRs for which the access requestor requests from the access controller; Log_{AR}: a measurement log corresponding to PCR values for which the access controller requests; PCRs_{AR}: the PCR values for which the access controller requests; [N_{S}, PCR_{SAR}]_{Sig}: a signature by the access requestor signing the random number Ns generated by the TPM of the access controller and the corresponding PCR values for which the access controller requests; N_{AC}: a random number generated for a user of the access controller; Log_{AC}: a measurement log corresponding to PCR values for which the access requestor requests; PCRs_{AC}: the PCR values for which the access requestor requests; [N_{AR}, PCRs_{AC}]_{Sig}: a signature by the access controller signing the random number N_{AR} generated by the TPM of the access requestor and the corresponding PCR values for which the access requestor requests; Result_{AIK-PCRs}: result of AIK certificate authentication and integrity verification of the access requestor and the access controller; [Result_{AIK-PCRs}]_{Sig}: a signature by a policy manager signing the result of AIK certificate authentication and integrity verification of the access requestor and the access controller; Re_{AC}: the result of platform integrity verification of the access requestor; Re_{AR}: the result of platform integrity verification of the access controller; Re_{AR-AIK}: the result of AIK certificate verification of the access requestor; and Re_{AC-AIK}: the result of AIK certification verification of the access controller.

### Detailed Description of the Invention

The invention generally consists of a network access layer, an integrity evaluation layer and an integrity measurement layer. An access requestor, an access controller and a policy manager, which are the three logic entities of the invention, can be distributed anywhere over a network. The access requestor is also referred to as a requestor, a user station, etc.; the access controller is also referred to as an authentication access controller, a base station, an access service unit, etc.; and the policy manager is also referred to as an authentication server, a trusted server, a background server, etc.

The network access layer is responsible for performing bidirectional user authentication and key agreement between the access requestor and the access controller, and performing mutual access control of the access requestor and the access controller according to a result of network user authentications and a result of platform integrity evaluation. The network access layer can use an access control method based on Tri-element Peer Authentication, which is the network access control technology already defined in the Chinese WLAN standard.

The integrity evaluation layer is responsible for performing platform integrity evaluation between the access requestor and the access controller, including platform credential authentication and platform integrity verification. Tri-element Peer Authentication, i.e., third party based bidirectional authentication, is performed in the integrity evaluation layer between the access requestor, the access controller and the policy manager. The policy manager verifies validity of AIK certificates of the access requestor and the access controller and is responsible for verifying platform integrity of the access requestor and the access controller.

The integrity measurement layer is responsible for collecting and verifying platform integrity related information of the access requestor and the access controller.

Fig. 2 illustrates a complete information transmission process for a trusted network connection according to the invention. Detailed steps of implementing the invention are as follows:
(1.) Initialization is performed. The following steps are performed prior to establishment of a network connection:
   (1.1) a TNC client of the access requestor and a TNC server of the access controller both pre-prepare platform integrity information, and send to respective Integrity Measurement Collectors, IMCs, in the integrity measurement layer.
   (1.2) the TNC client and the TNC server both pre-set an integrity verification requirement, including a list of PCRs which the access requestor and the access controller request each another for verification.
   (1.3) Trusted Platform Modules, TPMs, of the access requestor and the access controller hash information required for a network policy, and then store in Platform Configuration Registers, PCRs,.
(2.) User authentication is performed.
   (2.1) a network access requestor initiates an access request to a network access controller.
   (2.2) upon reception of the access request, the network access controller initiates a bidirectional user authentication process and starts a Tri-element Peer Authentication protocol, i.e., a third party based bidirectional authentication protocol, between the network access requestor, the network access controller and an user authentication service unit at the network access layer, so as to perform bidirectional user authentication and key agreement of the access requestor and the access controller.
   (2.3) upon successful bidirectional user authentication, the network access requestor and the network access controller send user authentication success information to the TNC client and the TNC server respectively, and control points of the network access requestor and the network access controller according to result of user authentication, thereby data of an integrity evaluation process can pass through.
(3.) Integrity evaluation is performed.

When the TNC server of the access controller receives the user authentication success information sent by the network access controller, the TNC client, the TNC server and a platform evaluation service unit in the integrity evaluation layer use a Tri-element Peer Authentication method to perform platform integrity evaluation of the access requestor and the access controller. In the platform integrity evaluation process, the TNC server, the TNC client and the platform evaluation service unit perform information interaction with integrity measurement collectors and integrity measurement verifiers in the upper layer. Platform integrity evaluation is performed as follows:

Platform credential authentication is performed: the policy manager verifies AIK certificates of the access requestor and the access controller for validity; and

② Platform integrity verification is performed: the policy manager verifies platform integrity of the access requestor and the access controller.

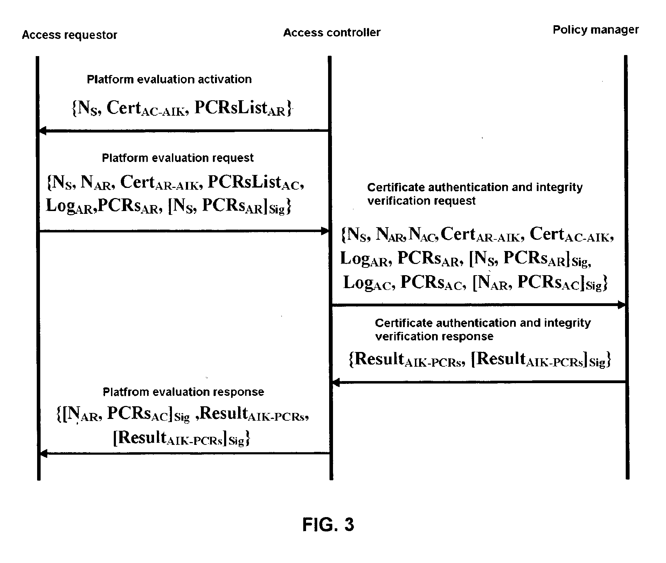

Referring to Fig.3, a detailed implementation of platform integrity verification according to the invention is as follows:
(3.1) when the TNC server of the access controller receives the user authentication success information sent by the network access controller or is confirmed that user authentication is successful, a random number N_{S} generated by the TPM of the access controller, the AIK certificate Cert_{AC-AIK} of the access controller, and the list of PCRs PCRsList_{AR} for which the access controller requests from the access requestor, are sent to the access requestor.
(3.2) upon reception of the information sent in step (3.1) by the access controller, the access requestor firstly extracts corresponding PCR values from the TPM according to the list of PCRs for which the access controller requests, then signs with an AIK private key in the TPM the corresponding PCR values extracted from the TPM and the random number N_{S} generated by the TPM of the access controller. Finally, the access requestor sends to the access controller the random number N_{S} generated by the TPM of the access controller, a random number N_{AR} generated by the TPM of the access requestor, the AIK certificate Cert_{AR-AIK} of the access requestor, the list of PCRs PCRsList_{AC} for which the access requestor requests the access controller, PCR values PCR_{SAR} for which the access controller requests, a measurement log Log_{AR} corresponding to the PCR values for which the access controller requests, and the signature generated by the access requestor signing with the AIK private key in the TPM of the corresponding PCR values extracted from the TPM and the random number N_{S} generated by the TPM of the access controller.
(3.3) upon reception of the information sent in step (3.2) by the access requestor, the access controller firstly has the TPM verify consistency of the random number N_{S} generated by the TPM of the access controller, and verify validity of an AIK signature of the access requestor with a public key in the AIK certificate of the access requestor; next, extracts corresponding PCR values from the TPM according the list of PCRs for which the access requestor requests. Then, the access controller signs with an AIK private key in the TPM the corresponding PCR values extracted from the TPM and the random number N_{AR} generated by the TPM of the access requestor. Finally, the access controller sends to the policy manager the random number N_{S} generated by the TPM of the access controller, the random number N_{AR} generated by the TPM of the access requestor, the AIK certificate Cert_{AR-AIK} of the access requestor, the PCR values, PCRs_{AR}, for which the access controller requests, the measurement log Log_{AR} corresponding to the PCR values for which the access controller requests, the signature generated by the access requestor with the AIK private key in the TPM on the corresponding PCR values extracted from the TPM and the random number N_{S} generated by the TPM of the access controller, a random number N_{AC} generated for a user of the access controller, the AIK certificate Cert_{AC-AIK} of the access controller, PCR values PCRs_{AC} for which the access requestor requests, a measurement log Log_{AC} corresponding to the PCR values for which the access requestor requests, and the signature generated from the AIK private key in the TPM by the access controller on the corresponding PCR values extracted from the TPM and the random number N_{AR} generated by the TPM of the access requestor.
(3.4) Upon reception of the information sent in step (3.3) by the access controller, the policy manager firstly verifies validity of the AIK signatures and AIK certificates of the access requestor and the access controller with public keys corresponding to the respective AIK certificates of the access requestor and the access controller. Then, it recalculates corresponding PCR values according to measurement logs of the corresponding PCR values extracted from the respective TPMs of the access requestor and the access controller and standard integrity measurement values of respective platform components in a database, and compares them with the corresponding PCR values in the information sent in step (3.3) by the access controller. Next, it generates a result of AIK certificate authentication and platform integrity verification, Result_{AIK-PCRs}, of the access requestor and the access controller and signs [Result_{AIK-PCRs}]_{Sig} the generated result of AIK certificate authentication and platform integrity verification with a private key corresponding to an identify certificate of the policy manager. Finally, it sends to the access controller the result of AIK certificate authentication and platform integrity verification, Result_{AIK-PCRs}, of the access requestor and the access controller and the signature [Result_{AIK-PCRs}]_{Sig} performed by the policy manager on the result of AIK certificate authentication and platform integrity verification of the access requestor and the access controller.

Particularly, the result of AIK certificate authentication and platform integrity verification, Result_{AIK-PCRs}, of the access requestor and the access controller generated in step (3.4) include: the random number N_{AC} generated for the user of the access controller, the random number N_{S} generated by the TPM of the access controller, the AIK certificate Cert_{AR-AIK} of the access requestor, the PCR values, PCRs_{AR}, for which the access controller requests, the result of platform integrity verification of the access requestor Re_{AR}, the random number N_{AR} generated by the TPM of the access requestor, the AIK certificate Cert_{AC-AIK} of the access controller, the list of PCRs, the PCR values, PCRs_{AC}, for which the access requestor requests, the result of platform integrity verification of the access controller Re_{AC}, the result of AIK certificate verification of the access requestor Re_{AR-AIK}, and the result of AIK certificate verification of the access controller Re_{AC-AIK}.
(3.5) upon reception of the information sent in step (3.4) by the policy manager, the access controller firstly verifies whether a random number N_{AC} generated for the user of the access controller is consistent with the random number N_{AC} generated for the user of the access controller and sent in the information in step (3.4) by the policy manager, and verifies validity of a user signature of the policy manager. Next, it has the TPM verify consistency of the random number N_{S} generated by the TPM of the access controller, and verify consistency of the AIK certificate of the access requestor Cert_{AR-AIK} and the PCR values PCRs_{AR}, for which the access controller requests. Then, it verifies the result of AIK certificate verification of the access requestor Re_{AR-AIK} and the result of platform integrity verification of the access requestor Re_{AR} and generates a result of platform integrity evaluation of the access requestor. Finally, the access controller sends to the access requestor the information sent in step (3.4) and the signature generated from the AIK private key in the TPM by the access controller on the corresponding PCR values extracted from the TPM and the random number N_{AR} generated by the TPM of the access requestor.

Particularly in the process of generating the result of platform integrity evaluation of the access requestor in step (3.5), if the access controller is not satisfied with the result, or, on demand of another network policy, the access controller may repeat step (3.1) - step (3.6) to exchange and verify integrity information again with the access requestor, where the process of verifying validity of the AIK certificate and additional processes of platform integrity verification performed by the access requestor on the access controller may be used as needed.
(3.6) upon reception of the information sent in step (3.5) by the access controller, the access requestor firstly verifies validity of an AIK signature of the access controller and the user signature of the policy manager. Then, it has the TPM verify consistency of the random number N_{AR} generated by the TPM of the access requestor. Next, it verifies consistency of the AIK certificate of the access controller and the PCR values for which the access requestor requests. Finally, it verifies the result of AIK certificate verification of the access controller Re_{AC-AIK} and the result of platform integrity verification of the access controller Re_{AC} and generates a result of platform integrity evaluation of the access requestor.

Particularly in the process of generating the result of platform integrity evaluation of the access requestor in step (3.6), if the access requestor is not satisfied with the result, or, on demand of another network policy, the access requestor may repeat step (3.2) - step (3.6) to exchange and verify integrity information again with the access controller, where the process of verifying for validity the AIK certificate and additional processes of platform integrity verification performed by the access controller on the access requestor may be used as needed.

### (4.) Access control is performed.

The TNC server and the TNC client gather the results of platform integrity evaluation of the access controller and the access requestor respectively, and then send recommendations to the network access requestor and the network access controller respectively. The recommendations sent by the TNC server and the TNC client to the network access requestor and the network access controller may include: access permission information, access prohibition information, isolation and repair information, etc. The network access requestor and the network access controller control the ports according to the respectively received recommendations, so as to perform mutual access control of the access requestor and the access controller.

In the foregoing embodiments of the invention, key agreement is performed between the access requestor and the access controller, and security protection is performed directly for the data in the platform integrity evaluation process and service data following the trusted network connection, no additional session key agreements are required. Therefore the key agreement process can be simplified and security of the trusted network connection can be improved. The primary key generated for authentication does not have to be sent over the network, thereby ensuring security of the key.

Moreover, the Tri-element Peer Authentication method, i.e., the third party based bidirectional authentication method, is used at the integrity evaluation layer for centralized authentication and verification of the respective AIK certificates and platform integrity of the access requestor and the access controller to thereby enhance security of the platform integrity evaluation process and simplify the key management and integrity verification mechanism of the Trusted Network Connect architecture.

Furthermore, the embodiments of the invention use the Tri-element Peer Authentication method not only for bidirectional user authentication at the network access layer but also for bidirectional platform integrity evaluation at the integrity evaluation layer to thereby improve security of the entire Trusted Network Connect architecture.

In addition, in practice, the policy manager may have to to manage a large number of access controllers. The embodiments of the invention can eliminate the demand for strong security association between the access controller and the policy manager to thereby enhance extendibility of Trusted Network Connect.

The Trusted Network Connect method based on Tri-element Peer Authentication according to the invention is detailed as above. The principle and embodiments of the invention are set forth in the context by way of examples, and the foregoing descriptions of the embodiments are merely intended to help understanding of the solution of the invention; and those skilled in the art may make variations to the embodiments and application scopes without departing from the scope of the invention, and the disclosure here shall not be taken in any sense of limiting the scope of the invention.

## Claims

1. A Trusted Network Connect, TNC, method based on Tri-element Peer Authentication, comprising:
(1.) initialization step:
(1.1) pre-preparing, by a TNC client of an access requestor and a TNC server of an access controller, platform integrity information, and sending the platform integrity information to respective Integrity Measurement Collectors, IMCs, in an integrity measurement layer;
(1.2) pre-setting, by the TNC client and the TNC server, an integrity verification requirement comprising a list of Platform Configuration Registers, PCRs, for which the access requestor and the access controller request each other for verification; and
(1.3) hashing, by trusted Platform Modules, TPMs, of the access requestor and the access controller, information required for a network policy, and storing in the PCRs;
(2.) user authentication step:
(2.1) initiating, by a network access requestor, an access request to a network access controller;
(2.2) initiating, by the network access controller, upon reception of the access request, a bidirectional user authentication process, and starting a Tri-element Peer Authentication protocol between the network access requestor, the network access controller and a user authentication service unit in a network access layer, so as to perform bidirectional user authentication and key agreement of the access requestor and the access controller; and
(2.3) sending, by the network access requestor and the network access controller, upon successful bidirectional user authentication, user authentication success information to the TNC client and the TNC server respectively, and controlling points of the network access requestor and the network access controller according to a user authentication result;
(3.) integrity evaluation step:
using, by the TNC client, the TNC server and a platform evaluation service unit in an integrity evaluation layer, a Tri-element Peer Authentication method to perform platform integrity evaluation of the access requestor and the access controller when the TNC server of the access controller receives the user authentication success information sent by the network access controller; and
(4.) access control step:
gathering, by the TNC server and the TNC client, results of the platform integrity evaluation of the access controller and the access requestor respectively, and sending recommendations to the network access requestor and the network access controller respectively, and controlling, by the network access requestor and the network access controller, the ports according to respectively received recommendations, so as to perform mutual access control of the access requestor and the access controller.

2. The TNC method based on Tri-element Peer Authentication according to claim 1, wherein the platform integrity evaluation comprises: verifying, by a policy manager, validity of an AIK certificates and platform integrity of the access requestor and the access controller.

3. The TNC method based on Tri-element Peer Authentication according to claim 1, wherein the step of the TNC client, the TNC server and the platform evaluation service unit in the integrity evaluation layer using the Tri-element Peer Authentication method to perform platform integrity evaluation of the access requestor and the access controller comprises:
(3.1) sending, by the TNC server of the access controller, to the access requestor a random number N_{S} generated by a TPM of the access controller, the AIK certificate Cert_{AC-AIK} of the access controller, and the list of PCRs PCRsList_{AR} for which the access controller requests from the access requestor, upon receiving the user authentication success information sent by the network access controller or being confirmed the user authentication is successful;
(3.2) extracting, by the access requestor, upon reception of the information sent in step (3.1) by the access controller, corresponding PCR values from the TPM according to the list of PCRs requested by the access controller; then, signing the corresponding PCR values extracted from the TPM and the random number N_{S} generated by the TPM of the access controller with an AIK private key in the TPM; and sending, by the access requestor, to the access controller, the random number N_{S} generated by the TPM of the access controller, a random number N_{AR} generated by a TPM of the access requestor, the AIK certificate Cert_{AR-AIK} of the access requestor, the list of PCRs PCRsList_{AC} for which the access requestor requests from the access controller, PCR values PCRs_{AR} for which the access controller requests, a measurement log Log_{AR} corresponding to the PCR values for which the access controller requests, and the signature generated by the access requestor signing the corresponding PCR values extracted from the TPM and the random number N_{S} generated by the TPM of the access controller with the AIK private key in the TPM;
(3.3) verifying, by the TPM, upon the access controller receiving the information sent in step (3.2) by the access requestor, consistency of the random number N_{S} generated by the TPM of the access controller, and verifying validity of an AIK signature of the access requestor by using a public key in the AIK certificate of the access requestor; extracting corresponding PCR values from the TPM according to the list of PCRs for which the access requestor requests; signing, by the access controller, the corresponding PCR values extracted from the TPM and the random number N_{AR} generated by the TPM of the access requestor with an AIK private key in the TPM,; and sending, by the access controller, to a policy manager, the random number Ns generated by the TPM of the access controller, the random number N_{AR} generated by the TPM of the access requestor, the AIK certificate Cert_{AR-AIK} of the access requestor, the PCR values PCR_{SAR} for which the access controller requests, the measurement log Log_{AR} corresponding to the PCR values for which the access controller requests, the signature generated by the access requestor signing the corresponding PCR values extracted from the TPM and the random number N_{S} generated by the TPM of the access controller with the AIK private key in the TPM, a random number N_{AC} generated for a user of the access controller, the AIK certificate Cert_{AC-AIK} of the access controller, PCR values PCRs_{AC} for which the access requestor requests, a measurement log Log_{AC} corresponding to the PCR values for which the access requestor requests, and the signature generated by the access controller signing the corresponding PCR values extracted from the TPM and the random number N_{AR} generated by the TPM of the access requestor with the AIK private key in the TPM;
(3.4) verifying, by the policy manager, upon reception of the information sent in step (3.3) by the access controller, validity of the AIK signatures and AIK certificates of the access requestor and the access controller by using public keys corresponding to the respective AIK certificates of the access requestor and the access controller; recalculating, corresponding PCR values according to the measurement logs of the corresponding PCR values extracted from the respective TPMs of the access requestor and the access controller and standard integrity measurement values of respective platform components in a database, and comparing with the corresponding PCR values in the information sent in step (3.3) by the access controller; generating, a result of AIK certificate authentication and platform integrity verification of the access requestor and the access controller, Result_{AIK-PCRs}, and signing the generated result of AIK certificate authentication and platform integrity verification with a private key corresponding to an identify certificate of the policy manager [Result_{AIK-PCRs}]_{Sig}; and sending, to the access controller, the result of AIK certificate authentication and platform integrity verification of the access requestor and the access controller Result_{AIK-PCRs}, and the signature [Result_{AIK-PCRs}]_{Sig} signed by the policy manager of the result of AIK certificate authentication and platform integrity verification of the access requestor and the access controller;
(3.5) verifying, by the access controller, upon reception of the information sent in step (3.4) by the policy manager, whether a random number N_{AC} generated for the user of the access controller is consistent with the random number N_{AC} sent in the information in step (3.4) by the policy manager and generated for the user of the access controller, and verifying validity of a user signature of the policy manager; verifying, by the TPM, consistency of the random number N_{S} generated by the TPM of the access controller; and verifying consistency of the AIK certificate Cert_{AR-AIK} of the access requestor and the PCR values PCRs_{AR} for which the access controller requests; verifying the result of AIK certificate verification of the access requestor Re_{AR-AIK} and the result of platform integrity verification of the access requestor Re_{AR} ,and generating a result of platform integrity evaluation of the access requestor; and sending, by the access controller, to the access requestor, the information sent in step (3.4) and the signature generated by the access controller signing the corresponding PCR values extracted from the TPM and the random number N_{AR} generated by the TPM of the access requestor with the AIK private key in the TPM; and
(3.6) verifying, by the access requestor, upon reception of the information sent in step (3.5) by the access controller, validity of the AIK signature of the access controller and the user signature of the policy manager; verifying, the TPM, consistency of the random number N_{AR} generated by the TPM of the access requestor; verifying consistency of the AIK certificate of the access controller and the PCR values for which the access requestor requests; and verifying the result of AIK certificate verification of the access controller Re_{AC-AIK} and the result of platform integrity verification of the access controller Re_{AC}, and generating a result of platform integrity evaluation of the access requestor.

4. The TNC method based on Tri-element Peer Authentication according to claim 3, wherein the result of AIK certificate authentication and platform integrity verification of the access requestor and the access controller generated in step (3.4) Result_{AIK-PCRs} comprises: the random number N_{AC} generated for the user of the access controller, the random number N_{S} generated by the TPM of the access controller, the AIK certificate Cert_{AR-AIK} of the access requestor, the PCR values PCRs_{AR} for which the access controller requests, the result of platform integrity verification of the access requestor Re_{AR}, the random number N_{AR} generated by the TPM of the access requestor, the AIK certificate Cert_{AC-AIK} of the access controller, the list of PCRs, the PCR values PCRs_{AC} for which the access requestor requests, the result of platform integrity verification of the access controller Re_{AC}, the result of AIK certificate verification of the access requestor Re_{AR-AIK}, and the result of AIK certificate verification of the access controller Re_{AC-AIK}.

5. The TNC method based on Tri-element Peer Authentication according to claim 1, 2, 3 or 4, wherein the recommendations sent in step (4.) by the TNC server and the TNC client to the network access requestor and the network access controller comprises access permission information, access prohibition information, or isolation and repair information.

6. The TNC method based on Tri-element Peer Authentication according to claim 5, wherein in the process of generating the result of platform integrity evaluation of the access requestor in step (3.5), steps (3.1) to (3.6) are repeated if the access controller has to exchange integrity information again with the access requestor and verify the integrity information.

7. The TNC method based on Tri-element Peer Authentication according to claim 6, wherein in the process of generating the result of platform integrity evaluation of the access requestor in step (3.6), steps (3.2) to (3.6) are repeated if the access requestor has to exchange integrity information again with the access controller and verify the integrity information.

## Patentansprüche

1. "Trusted-Network-Connect" TNC-Verfahren auf Basis einer Drei-Element-Peer-Authentifizierung, umfassend:
(1.) einen Initialisierungsschritt:
(1.1) Vorbereiten von Plattform-Integrität-Informationen durch einen TNC-Client von einem Zugriff-Anfragenden und einen TNC-Server von einem Zugriff-Controller, und Senden der Plattform-Integrität-Informationen zu jeweiligen Integrität-Messung-Sammlern, IMCs, in einer Integrität-Mess-Schicht,
(1.2) Voreinstellen einer Integrität-Verifizierung-Anforderung, umfassend eine Liste von Plattform-Konfiguration-Registern PCRs, welche der Zugriff-Anfragende und der Zugriff-Controller voneinander zur Verifizierung verlangen, durch den TNC-Client und den TNC-Server, und
(1.3) Berechnen einer Hash-Funktion von Informationen, die für eine Netzwerk-Richtlinie erforderlich sind, durch "Trusted Platform Modules" TPMs von dem Zugriff-Anfragenden und dem Zugriff-Controller, und Speichern in den PCRs,
(2.) einen Benutzer-Authentifizierungsschritt:
(2.1) Initiieren einer Zugriff-Anfrage an einen Netzwerk-Zugriff-Controller durch einen Netzwerk-Zugriff-Anfragenden,
(2.2) Initiieren, durch den Netzwerk-Zugriff-Controller, bei Empfang der Zugriff-Anfrage, eines bidirektionalen Benutzer-Authentifizierung-Verfahrens und Starten eines Drei-Element-Peer-Authentifizierung-Protokolls zwischen dem Netzwerk-Zugriff-Anfragenden, dem Netzwerk-Zugriff-Controller und einer Benutzer-Authentifizierung-Service-Einheit in einer Netzwerk-Zugriff-Schicht, um eine bidirektionale Benutzer-Authentifizierung durchzuführen und eine Schlüssel-Vereinbarung von dem Zugriff-Anfragenden und dem Zugriff-Controller zu treffen, und (2.3) bei erfolgreicher bidirektionaler Benutzer-Authentifizierung, Senden von Benutzer-Authentifizierung-Erfolg-Informationen jeweils an den TNC-Client und den TNC-Server durch den Netzwerk-Zugriff-Anfragenden und den Netzwerk-Zugriff-Controller, und Steuern/Regeln von Punkten des Netzwerk-Zugriff-Anfragenden und des Netzwerk-Zugriff-Controllers gemäß einem Benutzer-Authentifizierung-Ergebnis,
(3.) einen Integrität-Evaluierungsschritt:
Verwenden eines Drei-Element-Peer-Authentifizierung-Verfahrens durch den TNC-Client, den TNC-Server und eine Plattform-Evaluation-Service-Einheit in einer Integrität-Evaluation-Schicht, um eine Plattform-Integrität-Evaluation des Zugriff-Anfragenden und des Zugriff-Controllers durchzuführen, wenn der TNC-Server von dem Zugriff-Controller die durch den Netzwerk-Zugriff-Controller gesendeten Benutzer-Authentifizierung-Erfolg-Informationen empfängt, und
(4.) einen Zugriff-Steuer/Regel-Schritt:
Sammeln von Ergebnissen der Plattform-Integrität-Evaluation jeweils von dem Zugriff-Controller und dem Zugriff-Anfragenden durch den TNC-Server und den TNC-Client, und Senden von Empfehlungen jeweils an den Netzwerk-Zugriff-Anfragenden und den Netzwerk-Zugriff-Controller, und Steuern/Regeln der Ports durch den Netzwerk-Zugriff-Anfragenden und den Netzwerk-Zugriff-Controller gemäß jeweils empfangener Empfehlungen, um eine gegenseitige Zugriff-Steuerung/Regelung von dem Zugriff-Anfragenden und dem Zugriff-Controller durchzuführen.

2. TNC-Verfahren auf Basis einer Drei-Element-Peer-Authentifizierung nach Anspruch 1, wobei die Plattform-Integrität-Evaluation umfasst: Verifizieren, durch einen Richtlinien-Manager, einer Gültigkeit von einem AIK-Zertifikat und der Plattform-Integrität von dem Zugriff-Anfragenden und dem Zugriff-Controller.

3. TNC-Verfahren auf Basis einer Drei-Element-Peer-Authentifizierung nach Anspruch 1, wobei der Schritt, bei dem der TNC-Client, der TNC-Server und die Plattform-Evaluation-Service-Einheit in der Integrität-Evaluation-Schicht das Drei-Element-Peer-Authentifizierung-Verfahren verwenden, um die Plattform-Integrität-Evaluation von dem Zugriff-Anfragenden und dem Zugriff-Controller durchzuführen, umfasst:
(3.1) Senden einer durch ein TPM von dem Zugriff-Controller erzeugten Zufallszahl NS, des AIK-Zertifikats Cert_{AC-AIK} des Zugriff-Controllers und der Liste von PCRs PCRsList_{AR}, welche der Zugriff-Controller von dem Zugriff-Anfragenden fordert, durch den TNC-Server von dem Zugriff-Controller an den Zugriff-Anfragenden, bei Empfang der durch den Netzwerk-Zugriff-Controller gesendeten Benutzer-Authentifizierung-Erfolg-Informationen oder bei Bestätigung, dass die Benutzer-Authentifizierung erfolgreich ist,
(3.2) Extrahieren, durch den Zugriff-Anfragenden, bei Empfang der in Schritt (3.1) durch den Zugriff-Controller gesendeten Informationen, entsprechender PCR-Werte von dem TPM gemäß der Liste von PCRs, die von dem Zugriff-Controller gefordert wird, dann Signieren der entsprechenden, von dem TPM extrahierten PCR-Werte und der durch das TPM von dem Zugriff-Controller erzeugten Zufallszahl N_{S} mit einem privaten AIK-Schlüssel in dem TPM, und Senden, durch den Zugriff-Anfragenden an den Zugriff-Controller, von: der durch das TPM von dem Zugriff-Controller erzeugten Zufallszahl N_{S}, einer durch ein TPM von dem Zugriff-Anfragenden erzeugten Zufallszahl N_{AR}, dem AIK-Zertifikat Cert_{AR-AIK} des Zugriff-Anfragenden, der Liste von PCRs PCRsList_{AC}, welche der Zugriff-Anfragende von dem Zugriff-Controller fordert, PCR-Werten PCRs_{AR}, welche der Zugriff-Controller fordert, einem Mess-Protokoll Log_{AR} entsprechend den PCR-Werten, welche der Zugriff-Controller fordert, und der Signatur, die dadurch erzeugt wird, dass der Zugriff-Anfragende die entsprechenden von dem TPM extrahierten PCR-Werte und die durch das TPM von dem Zugriff-Controller erzeugte Zufallszahl N_{S} mit dem privaten AIK-Schlüssel in dem TPM signiert,
(3.3) wenn der Zugriff-Controller die im Schritt (3.2) durch den Zugriff-Anfragenden gesendeten Informationen empfängt, Verifizieren, durch das TPM, einer Konsistenz der durch das TPM von dem Zugriff-Controller erzeugten Zufallszahl N_{S}, und Verifizieren einer Gültigkeit einer AIK-Signatur von dem Zugriff-Anfragenden unter Verwendung eines öffentlichen Schlüssels in dem AIK-Zertifikat von dem Zugriff-Anfragenden, Extrahieren entsprechender PCR-Werte von dem TPM gemäß der Liste von PCRs, die der Zugriff-Anfragende fordert, Signieren, durch den Zugriff-Controller, der entsprechenden aus dem TPM extrahierten PCR-Werte und der durch das TPM von dem Zugriff-Anfragenden erzeugten Zufallszahl N_{AR} mit einem privaten AIK-Schlüssel in dem TPM, und Senden, durch den Zugriff-Controller an einen Richtlinien-Manager, von: der durch das TPM von dem Zugriff-Controller erzeugten Zufallszahl N_{S}, der durch das TPM von dem Zugriff-Anfragenden erzeugten Zufallszahl N_{AR}, dem AIK-Zertifikat Cert_{AR-AIK} des Zugriff-Anfragenden, den PCR-Werten PCRS_{AR}, welche der Zugriff-Controller fordert, dem Mess-Protokoll Log_{AR} entsprechend den PCR-Werten, welche der Zugriff-Controller fordert, der Signatur, die dadurch erzeugt wird, dass der Zugriff-Anfragende die entsprechenden von dem TPM extrahierten PCR-Werte und die durch das TPM von dem Zugriff-Controller erzeugte Zufallszahl N_{S} mit dem privaten AIK-Schlüssel in dem TPM signiert, einer für einen Benutzer des Zugriff-Controllers erzeugten Zufallszahl N_{AC}, dem AIK-Zertifikat Cert_{AC-AIK} des Zugriff-Controllers, PCR-Werten PCRs_{AC}, welche der Zugriff-Anfragende fordert, einem Mess-Protokoll Log_{AC} entsprechend den PCR-Werten, welche der Zugriff-Anfragende fordert und der Signatur, die dadurch erzeugt wird, dass der Zugriff-Controller die entsprechenden von dem TPM extrahierten PCR-Werte und die durch das TPM von dem Zugriff-Anfragenden erzeugte Zufallszahl N_{AR} mit dem privaten AIK-Schlüssel in dem TPM signiert,
(3.4) Verifizieren, durch den Richtlinien-Manager, bei Empfang der im Schritt (3.3) durch den Zugriff-Controller gesendeten Informationen, einer Gültigkeit der AIK-Signaturen und AIK-Zertifikate von dem Zugriff-Anfragenden und dem Zugriff-Controller unter Verwendung öffentlicher Schlüssel, die den jeweiligen AIK-Zertifikaten von dem Zugriff-Anfragenden und dem Zugriff-Controller entsprechen, neu Berechnen von entsprechenden PCR-Werten gemäß den Mess-Protokollen der entsprechenden PCR-Werte, die von den jeweiligen TPMs von dem Zugriff-Anfragenden und dem Zugriff-Controller extrahiert werden und Standard-Integrität-Messwerten von jeweiligen Plattform-Komponenten in einer Datenbank, und Vergleichen mit den entsprechenden PCR-Werten in den im Schritt (3. 3) durch den Zugriff-Controller gesendeten Informationen, Erzeugen von einem Ergebnis von AIK-Zertifikat-Authentifizierung und Plattform-Integrität-Verifizierung von dem Zugriff-Anfragenden und dem Zugriff-Controller, Result_{AIK-PCRs}, und Signieren von dem erzeugten Ergebnis von der AIK-Zertifikat-Authentifizierung und der Plattform-Integrität-Verifizierung mit einem privaten Schlüssel entsprechend einem Identifizierung-Zertifikat von dem Richtlinien-Manager [Result_{AIK-PCRs}]_{Sig}, und Senden, an den Zugriff-Controller, von dem Ergebnis Resul_{tAIK-PCRs} der AIK-Zertifikat-Authentifizierung und Plattform-Integrität-Verifizierung von dem Zugriff-Anfragenden und dem Zugriff-Controller, und der Signatur [Result_{AIK- PCRs}]_{Sig}, signiert durch den Richtlinien-Manager, von dem Ergebnis von der AIK-Zertifikat-Authentifizierung und Plattform-Integrität-Verifizierung von dem Zugriff-Anfragenden und dem Zugriff-Controller,
(3.5) Verifizieren, durch den Zugriff-Controller, bei Empfang der im Schritt (3.4) durch den Richtlinien-Manager gesendeten Informationen, ob eine für den Benutzer des Zugriff-Controllers erzeugte Zufallszahl N_{AC} konsistent mit der Zufallszahl N_{AC} ist, die in den Informationen im Schritt (3.4) durch den Richtlinien-Manager gesendet wurde und für den Benutzer von dem Zugriff-Controller erzeugt wurde, und Verifizieren der Gültigkeit einer Benutzer-Signatur von dem Richtlinien-Manager, Verifizieren, durch das TPM, einer Konsistenz der durch das TPM von dem Zugriff-Controller erzeugten Zufallszahl N_{S} und Verifizieren einer Konsistenz von dem AIK-Zertifikat Cert_{AR-AIK} von dem Zugriff-Anfragenden und den PCR-Werten PCRs_{AR}, welche der Zugriff-Controller fordert, Verifizieren des Ergebnisses von der AIK-Zertifikat-Verifizierung von dem Zugriff-Anfragenden Re_{AR-AIK} und von dem Ergebnis der Plattform-Integrität-Verifizierung von dem Zugriff-Anfragenden Re_{AR}, und Erzeugen von einem Ergebnis einer Plattform-Integrität-Evaluation von dem Zugriff-Anfragenden, und Senden, durch den Zugriff-Controller an den Zugriff-Anfragenden, der im Schritt (3.4) gesendeten Informationen und der Signatur, die dadurch erzeugt wird, dass der Zugriff-Controller die entsprechenden von dem TPM extrahierten PCR-Werte und die durch das TPM von dem Zugriff-Anfragenden erzeugte Zufallszahl N_{AR} mit dem privaten AIK-Schlüssel in dem TPM signiert und
(3.6) Verifizieren, durch den Zugriff-Anfragenden, bei Empfang der im Schritt (3.5) durch den Zugriff-Controller gesendeten Informationen, einer Gültigkeit von der AIK-Signatur von dem Zugriff-Controller und der Benutzer-Signatur von dem Richtlinien-Manager, Verifizieren der TPM Konsistenz von der durch das TPM von dem Zugriff-Anfragenden erzeugten Zufallszahl N_{AR}, Verifizieren einer Konsistenz von dem AIK-Zertifikat von dem Zugriff-Controller und der PCR-Werte, welche der Zugriff-Anfragende fordert, und Verifizieren von dem Ergebnis der AIK-Zertifikat-Verifizierung von dem Zugriff-Controller RE_{AC-AIK} und von dem Ergebnis der Plattform-Integrität-Verifizierung von dem Zugriff-Controller Re_{AC} und Erzeugen von einem Ergebnis der Plattform-Integrität-Evaluation von dem Zugriff-Anfragenden.

4. TNC-Verfahren auf Basis einer Drei-Element-Peer-Authentifizierung gemäß Anspruch 3, wobei das Ergebnis Result_{AIK-PCRs} der AIK-Zertifikat-Authentifizierung und Plattform-Integrität-Verifizierung von dem Zugriff-Anfragenden und dem Zugriff-Controller, das im Schritt (3.4) erzeugt wird, umfasst: die für den Benutzer von dem Zugriff-Controller erzeugte Zufallszahl N_{AC}, die durch das TPM von dem Zugriff-Controller erzeugte Zufallszahl N_{S}, das AIK-Zertifikat Cert_{AR-AIK} von dem Zugriff-Anfragenden, die PCR-Werte PCRs_{AR}, welche der Zugriff-Controller fordert, das Ergebnis der Plattform-Integrität-Verifizierung von dem Zugriff-Anfragenden Re_{AR}, die durch das TPM von dem Zugriff-Anfragenden erzeugte Zufallszahl N_{AR}, das AIK-Zertifikat Cert_{AC-AIK} von dem Zugriff-Controller, die Liste von PCRs, die PCR-Werte PCRs_{AC}, welche der Zugriff-Anfragende fordert, das Ergebnis der Plattform-Integrität-Verifizierung von dem Zugriff-Controller Re_{AC}, das Ergebnis der AIK-Zertifikat-Verifizierung von dem Zugriff-Anfragenden Re_{AR-AIK} und das Ergebnis von der AIK-Zertifikat-Verifizierung von dem Zugriff-Controller Re_{AC-AIK}.

5. TNC-Verfahren auf Basis einer Drei-Element-Peer-Authentifizierung gemäß Anspruch 1, 2, 3 oder 4, wobei die im Schritt (4.) durch den TNC-Server und den TNC-Client an den Netzwerk-Zugriff-Anfragenden und den Netzwerk-Zugriff-Controller gesendeten Empfehlungen Zugriff-Erlaubnis-Informationen, Zugriff-Verbot-Informationen oder Isolation-und-Reparatur-Informationen umfassen.

6. TNC-Verfahren auf Basis einer Drei-Element-Peer-Authentifizierung gemäß Anspruch 5, wobei, in dem Verfahren zum Erzeugen von dem Ergebnis der Plattform-Integrität-Evaluation von dem Zugriff-Anfragenden im Schritt (3.5), Schritte (3.1) bis (3.6) wiederholt werden, wenn der Zugriff-Controller wieder Integrität-Informationen mit dem Zugriff-Anfragenden auszutauschen und die Integrität-Informationen zu verifizieren hat.

7. TNC-Verfahren auf Basis einer Drei-Element-Peer-Authentifizierung gemäß Anspruch 6, wobei, bei dem Verfahren zum Erzeugen von dem Ergebnis der Plattform-Integrität-Evaluation von dem Zugriff-Anfragenden im Schritt (3.6), Schritte (3.2) bis (3.6) wiederholt werden, wenn der Zugriff-Anfragende Integrität-Informationen wieder mit dem Zugriff-Controller auszutauschen und die Integrität-Informationen zu verifizieren hat.

## Revendications

1. Méthode de connexion de réseau de confiance, TNC, sur la base d'une authentification de pairs à trois éléments, comprenant :
(1.) une étape d'initialisation :
(1.1) la préparation, par un client TNC d'un demandeur d'accès et d'un serveur TNC d'un organe de commande d'accès, d'informations d'intégrité de plate-forme, et l'envoi des informations d'intégrité de plate-forme à des collecteurs de mesure d'intégrité, IMC, respectifs dans une couche de mesure d'intégrité ;
(1.2) le préréglage, par le client TNC et le serveur TNC, d'une exigence de vérification d'intégrité comprenant une liste de registres de configuration de plate-forme, PCR, pour lesquels le demandeur d'accès et l'organe de commande d'accès demandent leur vérification réciproque ; et
(1.3) le hachage, par des modules de plate-forme de confiance, TPM, du demandeur d'accès et de l'organe de commande d'accès, d'informations nécessaires pour une politique de réseau, et leur mémorisation dans les PCR ;
(2.) une étape d'authentification d'utilisateur :
(2.1) le lancement, par un demandeur d'accès de réseau, d'une demande d'accès à un organe de commande d'accès de réseau ;
(2.2) le lancement, par l'organe de commande d'accès de réseau, à la réception de la demande d'accès, d'un processus d'authentification d'utilisateur bidirectionnel, et le démarrage d'un protocole d'authentification de pairs à trois éléments entre le demandeur d'accès de réseau, l'organe de commande d'accès de réseau et une unité de service d'authentification d'utilisateur dans une couche d'accès de réseau, de manière à effectuer une authentification d'utilisateur bidirectionnelle et un accord de clé du demandeur d'accès et de l'organe de commande d'accès ; et
(2.3) l'envoi, par le demandeur d'accès de réseau et l'organe de commande d'accès de réseau, à l'authentification d'utilisateur bidirectionnelle réussie, d'informations de réussite d'authentification d'utilisateur respectivement au client TNC et au serveur TNC, et la commande de points du demandeur d'accès de réseau et de l'organe de commande d'accès de réseau en fonction d'un résultat d'authentification d'utilisateur ;
(3.) une étape d'évaluation d'intégrité . l'utilisation, par le client TNC, le serveur TNC et une unité de service d'évaluation de plate-forme dans une couche d'évaluation d'intégrité, d'une méthode d'authentification de pairs à trois éléments pour effectuer une évaluation d'intégrité de plate-forme du demandeur d'accès et de l'organe de commande d'accès lorsque le serveur TNC de l'organe de commande d'accès reçoit les informations de réussite d'authentification d'utilisateur envoyées par l'organe de commande d'accès de réseau ; et
(4.) une étape de commande d'accès :
le recueil, par le serveur TNC et le client TNC, des résultats de l'évaluation d'intégrité de plate-forme respectivement de l'organe de commande d'accès et du demandeur d'accès, l'envoi de recommandations respectivement au demandeur d'accès de réseau et à l'organe de commande d'accès de réseau, et la commande,
par le demandeur d'accès de réseau et l'organe de commande d'accès de réseau, des ports en fonction des recommandations respectivement reçues, afin d'effectuer une commande d'accès réciproque du demandeur d'accès et
de l'organe de commande d'accès.

2. Méthode TNC sur la base d'une authentification de pairs à trois éléments selon la revendication 1, dans laquelle l'évaluation d'intégrité de plate-forme comprend : la vérification, par un gestionnaire de politique, de la validité d'un certificat AIK et de l'intégrité de plate-forme du demandeur d'accès et de l'organe de commande d'accès.

3. Méthode TNC sur la base d'une authentification de pairs à trois éléments selon la revendication 1, dans laquelle l'étape à laquelle le client TNC, le serveur TNC et l'unité de service d'évaluation de plate-forme dans la couche d'évaluation d'intégrité utilisent la méthode d'authentification de pairs à trois éléments pour effectuer l'évaluation d'intégrité de plate-forme du demandeur d'accès et l'organe de commande d'accès comprend :
(3.1) l'envoi, par le serveur TNC de l'organe de commande d'accès, au demandeur d'accès d'un nombre aléatoire Ns généré par un TPM de l'organe de commande d'accès, le certificat AIK Cert_{AC-AIK} de l'organe de commande d'accès, et la liste de PCR PCRsList_{AR} que l'organe de commande d'accès demande au demandeur d'accès, à la réception des informations de réussite d'authentification d'utilisateur envoyées par l'organe de commande d'accès de réseau ou à la confirmation que l'authentification d'utilisateur est réussie ;
(3.2) l'extraction, par le demandeur d'accès, à la réception des informations envoyées à l'étape (3.1) par l'organe de commande d'accès, de valeurs de PCR correspondantes à partir du TPM en fonction de la liste de PCR demandés par l'organe de commande d'accès ; puis la signature des valeurs de PCR correspondantes extraites à partir du TPM et du nombre aléatoire N_{S} généré par le TPM de l'organe de commande d'accès avec une clé privée AIK dans le TPM ; et l'envoi, par le demandeur d'accès, à l'organe de commande d'accès, du nombre aléatoire N_{S} généré par le TPM de l'organe de commande d'accès, d'un nombre aléatoire N_{AR} généré par un TPM du demandeur d'accès, le certificat AIK Cert_{AR-AIK} du demandeur d'accès, la liste de PCR PCRsList_{AC} que le demandeur d'accès demande à l'organe de commande d'accès, les valeurs de PCR PCRS_{AR} que l'organe de commande d'accès demande, un journal de mesures Log_{AR} correspondant aux valeurs de PCR que l'organe de commande d'accès demande, et la signature générée par le demandeur d'accès signant les valeurs de PCR correspondantes extraites à partir du TPM et le nombre aléatoire N_{S} généré par le TPM de l'organe de commande d'accès avec la clé privée AIK dans le TPM ;
(3.3) la vérification, par le TPM, à la réception par l'organe de commande d'accès des informations envoyées à l'étape (3.2) par le demandeur d'accès, de la cohérence du nombre aléatoire N_{S} généré par le TPM de l'organe de commande d'accès, et la vérification de la validité d'une signature AIK du demandeur d'accès en utilisant une clé publique dans le certificat AIK du demandeur d'accès ; l'extraction de valeurs de PCR correspondantes à partir du TPM en fonction de la liste de PCR que le demandeur d'accès demande ; la signature, par l'organe de commande d'accès, des valeurs de PCR correspondantes extraites à partir du TPM et du nombre aléatoire NAR généré par le TPM du demandeur d'accès avec une clé privée AIK dans le TPM ; et l'envoi, par l'organe de commande d'accès, à un gestionnaire de politique, du nombre aléatoire Ns généré par le TPM de l'organe de commande d'accès, du nombre aléatoire N_{AR} généré par le TPM du demandeur d'accès, du certificat AIK Cert_{AR-AIK} du demandeur d'accès, des valeurs de PCR PCRs_{AR} que l'organe de commande d'accès demande, du journal de mesures Log_{AR} correspondant aux valeurs de PCR que l'organe de commande d'accès demande, de la signature générée par le demandeur d'accès signant les valeurs de PCR correspondantes extraites à partir du TPM et du nombre aléatoire N_{S} généré par le TPM de l'organe de commande d'accès avec la clé privée AIK dans le TPM, d'un nombre aléatoire N_{AC} généré pour un utilisateur de l'organe de commande d'accès, du certificat AIK Cert_{AC-AIK} de l'organe de commande d'accès, des valeurs de PCR PCRs_{AC} que le demandeur d'accès demande, d'un journal de mesures Log_{AC} correspondant aux valeurs de PCR que le demandeur d'accès demande, et de la signature générée par l'organe de commande d'accès signant les valeurs de PCR correspondantes extraites du TPM et du nombre aléatoire N_{AR} généré par le TPM du demandeur d'accès avec la clé privée AIK dans le TPM ;
(3.4) la vérification, par le gestionnaire de politique, à la réception des informations envoyées à l'étape (3.3) par l'organe de commande d'accès, de la validité des signatures AIK et des certificats AIK du demandeur d'accès et de l'organe de commande d'accès en utilisant des clés publiques correspondant aux certificats AIK respectifs du demandeur d'accès et de l'organe de commande d'accès ; le recalcul des valeurs de PCR correspondantes en fonction des journaux de mesures des valeurs de PCR correspondantes extraites à partir des TPM respectifs du demandeur d'accès et de l'organe de commande d'accès et de valeurs de mesure d'intégrité standard de composants de plate-forme respectifs dans une base de données, et la comparaison aux valeurs de PCR correspondantes dans les informations envoyées à l'étape (3.3) par l'organe de commande d'accès ; la génération d'un résultat de l'authentification de certificat AIK et de la vérification d'intégrité de plate-forme du demandeur d'accès et de l'organe de commande d'accès, Result_{AIK-PCRs,} et la signature du résultat généré par l'authentification de certificat AIK et par la vérification d'intégrité de plate-forme avec une clé privée correspondant à un certificat d'identité du gestionnaire de politique [Result_{AIK-PCRs}]_{Sig} ; et l'envoi, à l'organe de commande d'accès, du résultat de l'authentification de certificat AIK et de la vérification d'intégrité de plate-forme du demandeur d'accès et de l'organe de commande d'accès Result_{AIK-PCRs}, et de la signature [Result_{AIK-PCRs}]_{Sig} signée par le gestionnaire de politique du résultat de l'authentification de certificat AIK et de la vérification d'intégrité de plate-forme du demandeur d'accès et de l'organe de commande d'accès ;
(3.5) la vérification, par l'organe de commande d'accès, à la réception des informations envoyées à l'étape (3.4) par le gestionnaire de politique, si un nombre aléatoire N_{AC} généré pour l'utilisateur de l'organe de commande d'accès est cohérent avec le nombre aléatoire N_{AC} envoyé dans les informations à l'étape (3.4) par le gestionnaire de politique et généré pour l'utilisateur de l'organe de commande d'accès, et la vérification de la validité d'une signature d'utilisateur du gestionnaire de politique ; la vérification, par le TPM, de la cohérence du nombre aléatoire N_{S} généré par le TPM de l'organe de commande d'accès ; et la vérification de la cohérence du certificat AIK Cert_{AR-AIK} du demandeur d'accès et des valeurs de PCR PCRs_{AR} que l'organe de commande d'accès demande ; la vérification du résultat de la vérification de certificat AIK du demandeur d'accès Re_{AR-AIK} et du résultat de la vérification d'intégrité de plate-forme du demandeur d'accès Re_{AR}, et la génération d'un résultat d'évaluation d'intégrité de plate-forme du demandeur d'accès ; et l'envoi, par l'organe de commande d'accès, au demandeur d'accès, des informations envoyées à l'étape (3.4) et de la signature générée par l'organe de commande d'accès signant les valeurs de PCR correspondantes extraites à partir du TPM et le nombre aléatoire N_{AR} généré par le TPM du demandeur d'accès avec la clé privée AIK dans le TPM ; et
(3.6) la vérification, par le demandeur d'accès, à la réception des informations envoyées à l'étape (3.5) par l'organe de commande d'accès, de la validité de la signature AIK de l'organe de commande d'accès et de la signature d'utilisateur du gestionnaire de politique ; la vérification, par le TPM, de la cohérence du nombre aléatoire N_{AR} généré par le TPM du demandeur d'accès ; la vérification de la cohérence du certificat AIK de l'organe de commande d'accès et des valeurs de PCR que le demandeur d'accès demande ; et la vérification du résultat de la vérification de certificat AIK de l'organe de commande d'accès Re_{AC-AIK} et du résultat de la vérification d'intégrité de plate-forme de l'organe de commande d'accès Re_{AC}, et la génération d'un résultat d'évaluation d'intégrité de plate-forme du demandeur d'accès.

4. Méthode TNC sur la base d'une authentification de pairs à trois éléments selon la revendication 3, dans laquelle le résultat de l'authentification de certificat AIK et de la vérification d'intégrité de plate-forme du demandeur d'accès et de l'organe de commande d'accès généré à l'étape (3.4) Result_{AIK-PCRs} comprend : le nombre aléatoire N_{AC} généré pour l'utilisateur de l'organe de commande d'accès, le nombre aléatoire N_{S} généré par le TPM de l'organe de commande d'accès, le certificat AIK Cert_{AR-AIK} du demandeur d'accès, les valeurs de PCR PCRs_{AR} que l'organe de commande d'accès demande, le résultat de la vérification d'intégrité de plate-forme du demandeur d'accès Re_{AR}, le nombre aléatoire N_{AR} généré par le TPM du demandeur d'accès, le certificat AIK Cert_{AC-AIK} de l'organe de commande d'accès, la liste de PCR, les valeurs de PCR PCRs_{AC} que le demandeur d'accès demande, le résultat de la vérification d'intégrité de plate-forme de l'organe de commande d'accès Re_{AC}, le résultat de la vérification de certificat AIK du demandeur d'accès Re_{AR-AIK}, et le résultat de la vérification de certificat AIK de l'organe de commande d'accès Re_{AC-AIK}.

5. Méthode TNC sur la base d'une authentification de pairs à trois éléments selon la revendication 1, 2, 3 ou 4, dans laquelle les recommandations envoyées à l'étape (4.) par le serveur TNC et le client TNC au demandeur d'accès de réseau et à l'organe de commande d'accès de réseau comprennent des informations de permission d'accès, des informations d'interdiction d'accès ou des informations d'isolation et de réparation.

6. Méthode TNC sur la base d'une authentification de pairs à trois éléments selon la revendication 5, dans laquelle, dans le processus de génération du résultat d'évaluation d'intégrité de plate-forme du demandeur d'accès à l'étape (3.5), les étapes (3.1) à (3.6) sont répétées si l'organe de commande d'accès doit à nouveau échanger des informations d'intégrité avec le demandeur d'accès et vérifier les informations d'intégrité.

7. Méthode TNC sur la base d'une authentification de pairs à trois éléments selon la revendication 6, dans laquelle, dans le processus de génération du résultat d'évaluation d'intégrité de plate-forme du demandeur d'accès à l'étape (3.6), les étapes (3.2) à (3.6) sont répétées si le demandeur d'accès doit à nouveau échanger des informations d'intégrité avec l'organe de commande d'accès et vérifier les informations d'intégrité.
